# EUROPÄISCHE PATENTSCHRIFT

(11) **EP 0 561 049 B1**
(45) Veröffentlichungstag und Bekanntmachung des Hinweises auf die Patenterteilung: **11.10.1995**
(21) Anmeldenummer: 92120837.7
(22) Anmeldetag: 07.12.1992
(51) Int. Cl.: B60T 8/18, B60T 8/26

(54) **Bremsdruckregeleinrichtung zur Verschleissoptimierung zwischen Bremsen von Nutzfahrzeugen**
Braking pressure control device for optimising the wear of the brakes of commercial vehicles
Dispositif de régulation de la pression du fluide de freinage pour une optimisation de la répartition de l'usure des freins des véhicules utilitaires

(30) Priorität: 20.03.1992 DE 4209178
(43) Veröffentlichungstag der Anmeldung: 22.09.1993
(73) Patentinhaber: KNORR-BREMSE Systeme für Nutzfahrzeuge GmbH, 80809 München (DE)
(72) Erfinder: Gerum, Eduard, Dr., W-8200 Rosenheim (DE); Vollmer, Otto, W-8000 München 21 (DE)

(56) Entgegenhaltungen:
- EP-A- 0 065 151
- EP-A- 0 147 585
- EP-A- 0 399 314
- EP-A- 0 443 124
- DE-A- 1 911 380
- DE-A- 2 500 219
- DE-A- 3 313 078
- DE-A- 3 609 340

## Beschreibung

Die Erfindung betrifft eine Bremsdruckregeleinrichtung nach dem Gattungsbegriff des Patentanspruches 1.

Bei der Bremsbetätigung an Nutzfahrzeugen kann zwischen Vorder- und Hinterachse unterschiedlicher Verschleiß an den Bremsbelägen auftreten; dies gilt auch für die Bremsen einer Achse als auch für den Belagverschleiß an Zugfahrzeug und Anhängerfahrzeug. Bekannt sind z. B. in Anhänger-Bremsanlagen verwendete Rückhalteventile mit Schnellentlüftung; derartige Rückhalteventile (Konstruktionsblatt DB 2000-K12 der Knorr-Bremse GmbH, München, Ausgabe 1976) werden bei Anhängerbremsanlagen mit Dauerbremse verwendet, wenn die Vorderachse mit größeren Bremszylindern ausgerüstet ist als die Hinterachse. Das Rückhalteventil hält den Druck an der Vorderachse um einen bestimmten Wert im unteren Bereich zurück, wobei bei steigendem Druck ein Ausgleich zwischen ein- und ausgesteuertem Bremsdruck stattfinden kann. Das tatsächliche Verschleißmaß, z.B. an Vorderachse und Hinterachse, bleibt bei derartigen Rückhalteventilen unberücksichtigt; es kann folglich zu ungleichem Verschleiß der Bremsbeläge von Vorder- und Hinterachse kommen, wenn die Einstellung des Rückhalteventils den tatsächlichen und sich verändernden Fahrgegebenheiten nicht angepaßt ist.

Bei Bremsdruckregeleinrichtungen der gattungsgemäßen Art (DE-OS 33 13 078) ist in wenigstens einem mit einem lastabhängigen Bemskraftregler versehenen Bremskreis ein dem Bremskraftregler nachgeschaltetes Druckrückhalteventil vorgesehen, welches als Magnetventil direkt gegenüber Radbremszylindern wirkt. Eine Druckrückhaltung am Bremskraftreglerausgang ist nicht vorgesehen.

Die Aufgabe der Erfindung besteht darin, bei einer Bremdruckregeleinrichtung der gattungsgemäßen Art eine verschleißabhängige Ansteuerung des Bremskraftreglers mit einfachen baulichen Mitteln herbeizuführen. Hierdurch soll bereits der ausgesteuerte Bremsdruck des Bremskraftreglers im Sinne der Druckrückhaltung beeinflußbar sein, um zu der gewünschten Verschleißoptimierung an den überwachten Bremsen des Nutzfahrzeugs beizutragen.

Zur Lösung dieser Aufgabe dienen die Merkmale nach dem Kennzeichnungsteil des Patentanspruches 1.

Durch die bauliche Integration oder unmittelbare Zuordnung des Druckrückhalteventils am Bremskraftregler ist der Eingangs-Steuerdruck desselben verschleißabhängig beeinflußt, derart, daß der über das integrierte Relaisventil des Bremskraftreglers großvolumig ausgesteuerte Bremsdruck mit entsprechender Druckrückhaltung versehen ist. Es ergibt sich der wesentliche Vorteil, daß die zusätzliche beladungsabhängige Veränderung der Druckrückhaltung erreicht wird, d.h. mit zunehmender Last vergrößert sich der verschleißabhängig geregelte Betrag der Druckrückhaltung, was für eine optimale Verschleißregelung wünschenswert ist.

Von weiterem Vorteil ist die Tatsache, daß die Druckrückhaltung auf den unteren Bremsdruckbereich beschränkt bleibt, also auf den Bereich, wo die meisten Bremsúngen stattfinden. Die Abmessungen und Querschnitte des Druckrückhalteventils können relativ klein ausgeführt werden, da es in der Steuerleitung liegt und nicht in der zum Verbraucher führenden Leitung nach dem Bremskraftregler (Zeitverhalten!).

Vorteilhafte Ausgestaltungen und Weiterbildungen sind in weiteren Patentansprüchen ausfgeführt.

Die Erfindung ist nachfolgend anhand von Ausführungsbeispielen unter Bezugnahme auf die beigefügte Zeichnung erläutert.
- Fig. 1 und 2: sind schematische Schnittdarstellungen von mit einem Druckrückhalteventil versehenen Bremskraftreglern gemäß der Erfindung; und
- Fig. 3 und 4: sind den Bremskraftreglern nach den Fig. 1 und 2 zugehörige Druckdiagramme mit Darstellung des ausgesteuerten Bremsdruckes gegenüber dem eingesteuerten Druck.

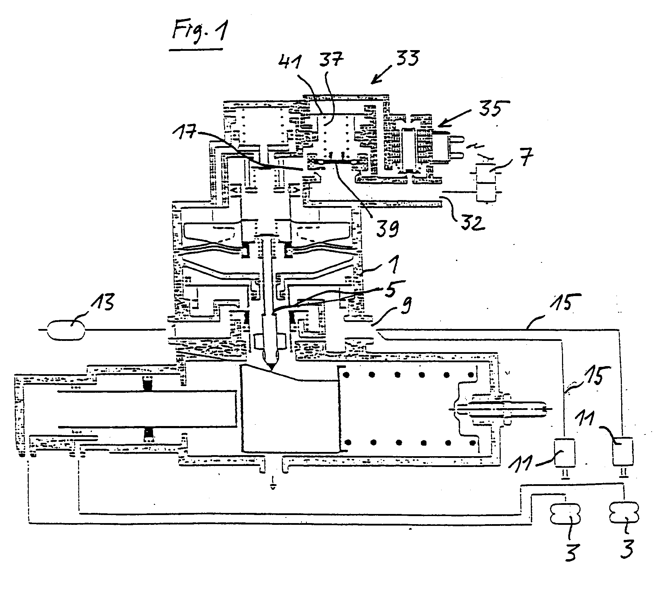

In Fig. 1 der Zeichnung ist ein lastabhängig wirkender Bremskraftregler 1 dargestellt, welcher pneumatisch angesteuert ist, d.h. es ist ein lastabhängig beeinflußter Stellmechanismus vorgesehen, welcher in Abhängigkeit vom Druck von Federbälgen 3 den Steuerhub eines Stößels 5 festlegt. Der von einem Bremsventil, im vorliegenden Fall von einem Fußbremsventil 7 eingesteuerte Steuerdruck löst in Abhängigkeit von der Position des Stößels 5 einen am Anschluß 9 anstehenden Bremsdruck für die Bremszylinder 11 z.B. der Hinterachse des Nutzfahrzeugs aus. Der ausgesteuerte Druck entsteht unter Relaiswirkung, d.h. mittels eines Vorrats 13 und eines im Bremskraftregler integrierten, funktionell nachgeschalteten Relaisventils steht der Bremsdruck am Anschluß 9 und in den Bremsleitungen 15 zur Verfügung, wenn der Steuerdruck am Anschluß 17 vorliegt.

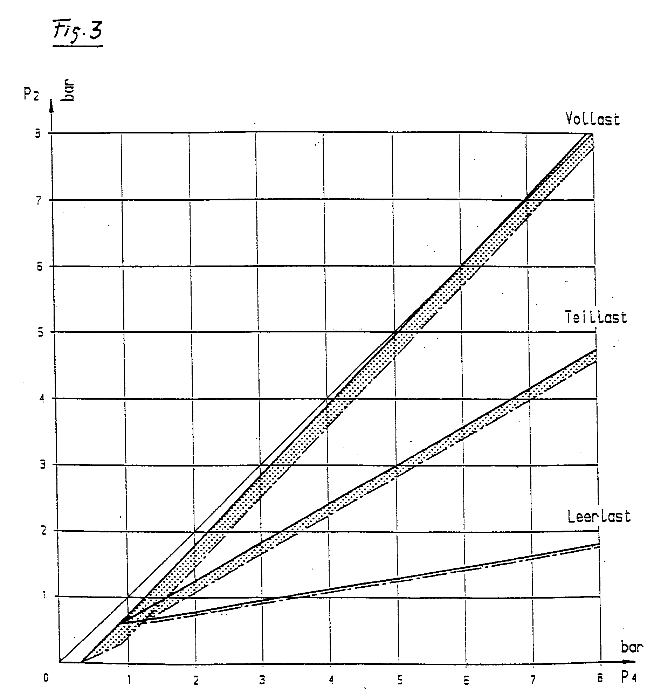

Gemäß der Erfindung ist am Bremskraftregler 1 ein Druckrückhalteventil 33 integriert. Die Eigenart des Druckrückhalteventils besteht darin, daß ohne Proportionalwirkung gearbeitet wird, d.h. es ist ein einfacher 3/2-Wege-Ventilmagnet 35 vorgesehen, welcher eine mittelbare Betätigung des über eine Feder 37 auf einen Ventilteller 39 einwirkenden Kolbens 41 nach Art einer Auf-/Zu-Betätigung beeinflußt. Der ein integriertes Rückschlagventil enthaltende Ventilteller 39 wirkt gegenüber einem Ventilsitz, derart, daß zwischen dem Anschluß 32 und dem Anschluß 17 eine Druckrückhaltung Δp entsprechend einem konstanten Wert erreicht wird. Der entsprechende Druckverlauf ist aus Fig. 3 der Zeichnung zu ersehen.

Es ist erkennbar, daß die Druckrückhaltung mit zunehmender Last größer wird, sie ist also im Bereich Vollast größer als im Bereich Leerlast.

Das Druckrückhalteventil 33 kann auch am Bremskraftregler anflanschbar sein, so daß gegebenenfalls eine Nachrüstung bereits bestehender Bremskraftregler möglich ist. Die erfindungsgemäße Anordnung ist natürlich nicht auf Bremskraftregler mit durch Luftfederbalgdruck lastabhängig wirkender Regelung beschränkt, d.h. anstelle der durch Luftfederbälge beaufschlagbaren Stelleinrichtung kann auch ein mechanisch beeinflußter, eine Nockenscheibe aufweisender Stellmechanismus vorgesehen sein, welcher lastabhängig auf den Stößel 5 des Bremskraftreglers einwirkt und in der Folge eine lastabhängige Beeinflussung des ausgesteuerten Bremsdruckes zeitigt.

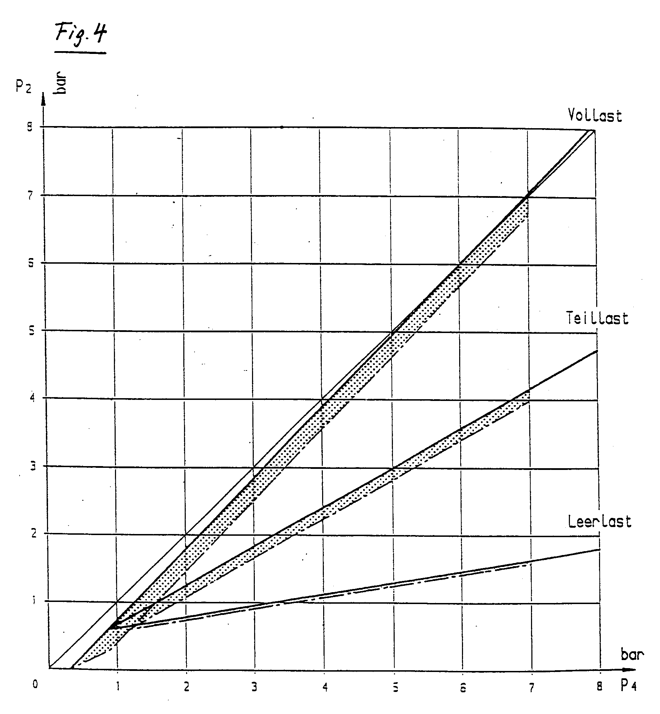

In Fig. 3 und 4 der Zeichnung sind in einem Diagramm der ausgesteuerte Druck p2 am Anschluß 9 des Bremskraftreglers gegenüber dem eingesteuerten Druck, d.h. dem Steuerdruck am Ahschluß 32 wiedergegeben. Die über die Luftfederbälge zur Wirkung gelangende Lastbeeinflussung ist anhand von Leerlast, Teillast und Vollast im Kennlinienverlauf des ausgesteuerten Druckes aufgezeigt; während die mit ausgezogenen Linien wiedergegebenen Druckverläufe die Auswirkung bei stromlosen Ventilmagneten des Druckrückhalteventils darstellen, ist mit strichpunktiertem Linienverlauf die Auswirkung bei erregtem Ventilmagneten des Druckrückhalteventils aufgezeigt. Es ist erkennbar, daß unterschiedliche Druckrückhaltung entsprechend Beladung des Fahrzeugs vorliegt; ein wesentliches Merkmal der erfindungsgemäßen Anordnung besteht darin, daß die Druckrückhaltung mit zunehmender Last vergrößert ist, d.h. es vergrößert sich der verschleißabhängig geregelte Betrag der Druckrückhaltung, was für eine optimale Verschleißregelung wünschenswert ist.

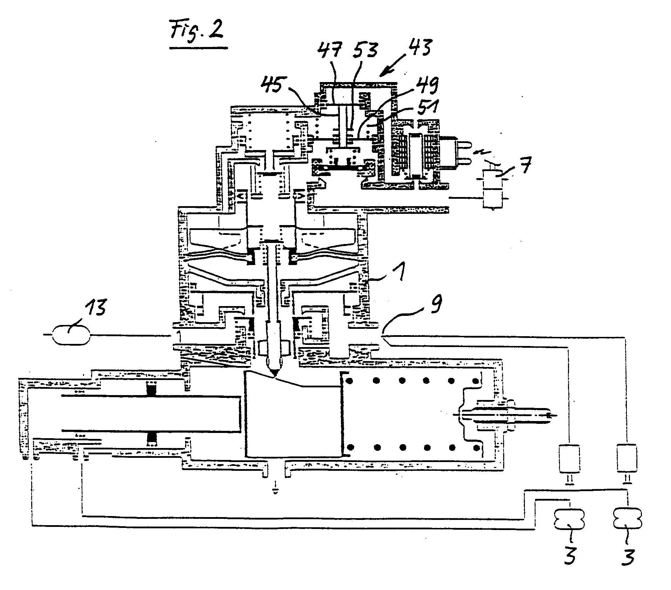

In Fig. 2 der Zeichnung ist eine Weiterbildung der in Fig. 1 wiedergegebenen Anordnung dargestellt. Das Druckrückhalteventil 43 nach Fig. 2 entspricht in seiner Wirkungsweise grundsätzlich dem Druckrückhalteventil nach Fig. 1, mit dem Unterschied jedoch, daß am Stößel 45 des Kolbens 47 ein durch den ausgesteuerten Druck des Druckrückhalteventils beaufschlagbarer Kolben 49 zur Anlage gelangen kann, wenn eine bestimmte Höhe des ausgesteuerten Druckes erreicht ist. Bei einem derartigen Druck bewegt sich der Kolben 49 gegen die Kraft einer Feder 51 gemäß Darstellung nach Fig. 2 nach oben gerichtet, bis Anlage an einem Bund 53 des Stößels 45 erreicht ist. In diesem Fall ist die Druckrückhaltung aufgehoben, wie der Kennlinienverlauf nach Fig. 4 erkennen läßt. Bei einem eingesteuerten Druck von 7 bar steht jeweils ein ausgesteuerter Druck auf der mit ausgezogenen Linien wiedergegebenen Kennlinie gegenüber, da die Druckrückhaltung bei Erreichen des Druckes von 7 bar aufgehoben ist.

## Patentansprüche

1. Bremsdruckregeleinrichtung zur Verschleißoptimierung zwischen Bremsen von Nutzfahrzeugen, mit wenigstens einem mechanisch oder pneumatisch angesteuerten Bremskraftregler (1), mit einer durch eine Steuereinheit elektrisch angesteuerten Ventileinrichtung, deren Ansteuerung in Abhängigkeit des Verschleißes erfolgt, welcher über Verschleißsensoren an den überwachten Bremsbelägen ermittelbar und in der Steuereinheit auswertbar ist,
dadurch gekennzeichnet,
daR die Ventileinrichtung aus einem druckgesteuerten Druckrückhalteventil (33;43) besteht, dessen Steueranschlußdruck über ein Magnetventil ansteuerbar ist, und daß das Druckrückhalteventil (33;43) unter baulicher Integration am Bremskraftregler (1) dem Steueranschluß des Bremskraftreglers vorgeschaltet ist, derart, daß der ausgesteuerte Druck des Druckrückhalteventils als Steuerdruck am Bremskraftregler (1) zur Verfügung steht.

2. Bremsdruckregeleinrichtung nach Anspruch 1, gekennzeichet durch folgende Merkmale:
a) das Druckrückhalteventil (33) weist wenigstens einen Einlaß (Anschluß 32) und einen Auslaß (Anschluß 17) auf;
b) zwischen Einlaß und Auslaß befindet sich ein von einem federbelasteten Ventilteller (39) überwachter Ventilsitz;
c) in Schließrichtung des Ventiltellers wirkt auf diesen unter Zwischenschaltung einer Feder (37) ein Kolben (41) ein; und
d) der Kolben (41) ist durch einen Druck beaufschlagbar, welcher von einem 3/2-Wege-Ventilmagnet (35) überwacht ist.

3. Bremsdruckregeleinrichtung nach Anspruch 1, gekennzeichet durch folgende Merkmale:
a) das Druckrückhalteventil (43) weist wenigstens einen Einlaß (Anschluß 32) und wenigstens einen Auslaß (Anschluß 17) auf;
b) zwischen Einlaß und Auslaß befindet sich ein von einem federbelasteten Ventilteller überwachter Ventilsitz;
c) in Schließrichtung des Ventiltellers wirkt auf diesen unter Zwischenschaltung wenigstens einer Feder ein Stößel (45) ein;
d) der Stößel trägt einen Kolben (47), welcher von einem durch einen 3/2-Wege-Ventilmagneten (35) ausgesteuerten Druck beaufschlagbar ist; und
e) dem Kolben (47) wirkt ein vom ausgesteuerten Druck des Druckrückhalteventiles (43) beaufschlagbarer, bei Erreichen einer vorbestimmten Druckhöhe in Anschlagposition mit dem Stößel (45) gelangender und hierdurch die Druckrückhaltung aufhebender Kolben (49) entgegen.

## Claims

1. Brake pressure control device for optimising the wear between brakes in commercial vehicles, having at least one mechanically or pneumatically controlled brake force regulator (1), having a valve device controlled electrically by a control unit, its control being effected in dependence on the wear which can be determined by means of wear sensors on the monitored brake linings and evaluated in the control unit,
characterised in that
the valve device comprises a pressure-limiting valve (33; 43) whose control terminal pressure can be controlled by means of a magnetic valve, and in that the pressure-limiting valve (33; 43) is structurally integrated on the brake force regulator (1) and connected upstream of the control terminal of the brake force regulator in such a way that the controlled output pressure of the pressure-limiting valve is available as the control pressure on the brake force regulator (1).

2. Brake pressure control device according to claim 1, characterised by the following features:
a) the pressure-limiting valve (33) has at least one inlet (terminal 32) and one outlet (terminal 17);
b) between the inlet and the outlet there is a valve seat monitored by a spring-loaded valve disc (39);
c) a piston (41) acts on the valve disc in its closing direction with the interposition of a spring (37); and
d) the piston (41) can be acted on by a pressure which is monitored by a 3/2-way valve magnet (35).

3. Brake pressure control device according to claim 1, characterised by the following features:
a) the pressure-limiting valve (43) has at least one inlet (terminal 32) and at least one outlet (terminal 17);
b) between the inlet and the outlet there is a valve seat monitored by a spring-loaded valve disc;
c) a ram (45) acts on the valve disc in its closing direction with the interposition of at least one spring;
d) the ram carries a piston (47) which can be acted on by an output pressure controlled by a 3/2-way valve magnet (35); and
e) a piston (49), which can be acted on by the controlled output pressure of the pressure-limiting valve (43) and which moves into a stop position with the ram (45) when a predetermined pressure level is reached and thus cancels the pressure-limitation, counteracts the piston (47).

## Revendications

1. Dispositif de régulation de pression de freinage pour l'optimisation de l'usure entre les freins de véhicules utilitaires, comprenant au moins un régulateur de la force de freinage (1) commandé mécaniquement ou pneumatiquement, qui comporte un dispositif à soupapes commandé électriquement par une unité de commande, et dont la commande s'effectue en fonction de l'usure, qui peut être déterminée par des capteurs d'usure sur les garnitures de frein contrôlées, et exploitée dans l'unité de commande,
caractérisé en ce que le dispositif à soupapes est constitué d'une soupape de retenue de pression (33; 43) commandée par la pression, dont la pression du raccord de commande peut être commandée par une soupape électromagnétique, et en ce que la soupape de retenue de pression (33; 43), en étant intégrée structurellement au régulateur de la force de freinage (1), est montée en amont du raccord de commande du régulateur de la force de freinage, d'une manière telle que la pression délivrée par la soupape de retenue de pression, est disponible sur le régulateur de la force de freinage (1), en tant que pression de commande.

2. Dispositif de régulation de pression de freinage selon la revendication 1, caractérisé par les particularités suivantes:
a) la soupape de retenue de pression (33) présente au moins une entrée (raccord 32) et une sortie (raccord 17);
b) entre l'entrée et la sortie, se trouve un siège de soupape contrôlé par un plateau de soupape (39) chargé par ressort;
c) un piston (41) agit, par l'intermédiaire d'un ressort (37) intercalé, sur le plateau de soupape, dans la direction de fermeture de celui-ci; et
d) le piston (41) peut être sollicité par une pression qui est contrôlée par une soupape électromagnétique à 3/2 voies (35).

3. Dispositif de régulation de pression de freinage selon la revendication 1, caractérisé par les particularités suivantes:
a) la soupape de retenue de pression (43) présente au moins une entrée (raccord 32) et au moins une sortie (raccord 17);
b) entre l'entrée et la sortie, se trouve un siège de soupape contrôlé par un plateau de soupape chargé par ressort;
c) un poussoir (45) agit, par l'intermédiaire d'au moins un ressort intercalé, sur le plateau de soupape, dans la direction de fermeture de celui-ci;
d) le poussoir porte un piston (47), qui peut être sollicité par une pression délivrée par une soupape électromagnétique à 3/2 voies (35); et
e) à l'encontre du piston (47) agit un piston (49), qui peut être sollicité par la pression délivrée de la soupape de retenue de pression (43), et qui, lorsqu'un niveau de pression prédéterminé est atteint, parvient dans une position de butée avec le poussoir (45), en annulant ainsi la retenue de pression.
